# FASCICULE DE BREVET EUROPEEN

(11) **EP 2 162 306 B1**
(45) Date de publication et mention de la délivrance du brevet: **04.07.2012**
(21) Numéro de dépôt: 08805803.7
(22) Date de dépôt: 19.05.2008
(51) Int. Cl.: B60J 1/08, B60J 5/04, B60J 10/00, B60J 10/02, B60R 13/04

(54) **ELEMENT D'HABILLAGE DE VITRE POUR VEHICULE AUTOMOBILE**
GLASVERKLEIDUNGSELEMENT FÜR EIN MOTORFAHRZEUG
GLASS TRIM ELEMENT FOR MOTOR VEHICLE

(30) Priorité: 04.06.2007 FR 0703967
(43) Date de publication de la demande: 17.03.2010
(73) Titulaire: Renault S.A.S., 92100 Boulogne-Billancourt (FR)
(72) Inventeur: VIVIER, Pierre, F-75014 Paris (FR)
(86) Numéro de dépôt international: PCT/FR2008/050857
(87) Numéro de publication internationale: WO 2008/152274

(56) Documents cités:
- DE-A1- 4 142 599
- DE-A1- 4 314 123
- DE-A1- 19 741 538

## Description

La présente invention concerne un élément d'habillage de vitre pour véhicule automobile, dans lequel une plaque sensiblement plane s'étend verticalement en arrière de la vitre, dans la continuité du plan de cette vitre, de sorte que l'extrémité avant de l'élément d'habillage recouvre la partie arrière de la vitre, et dans lequel cette plaque porte un moyen d'appui sensiblement perpendiculaire apte à venir en appui contre une structure de porte, au moins un moyen de serrage assurant la fixation du moyen d'appui et de l'élément d'habillage associé contre la structure de porte.

La finition arrière d'une porte automobile peut nécessiter l'emploi d'une vitre fixe, selon le design et l'inclinaison du pied milieu. Dans ces conditions, une des façons de construire l'architecture de la porte peut être de recourir à un élément d'habillage plutôt que de chausser la vitre sous un brin de coulisse.

Le recours à un élément d'habillage de type enjoliveur est la solution qui permet en général de trouver le meilleur compromis entre les exigences suivantes, à savoir la qualité perçue, l'inviolabilité, et l'étanchéité à l'eau et l'air.

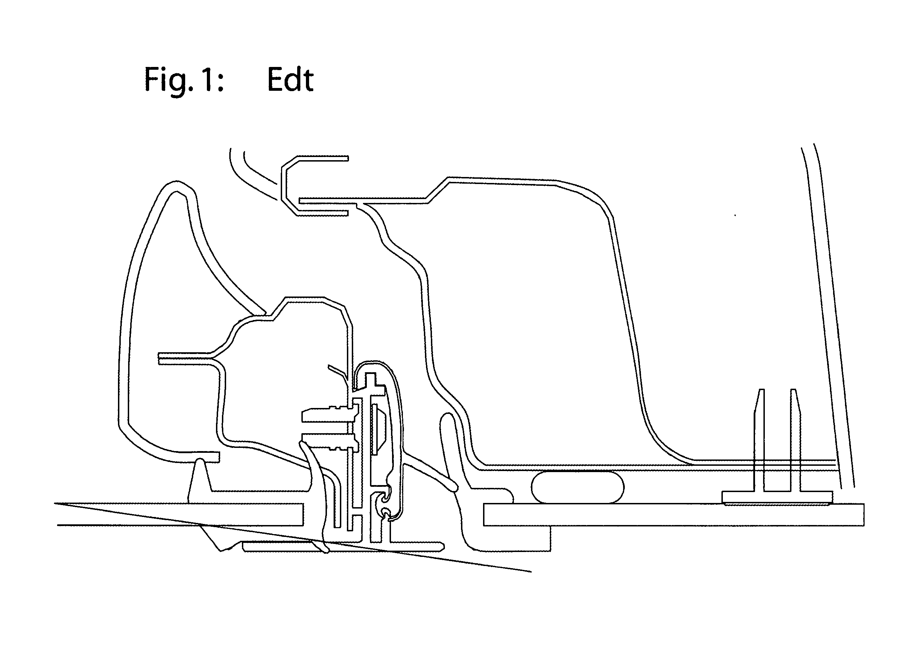

La présente invention porte sur l'interface entre cet enjoliveur et le cadre de porte. En effet, selon le type de porte, la section de cadre peut se prêter plus ou moins à l'interfaçage de cette pièce. Dans le cas d'une porte à cadre aluminium, par exemple, il est souvent possible de sortir des nervures du profilé extrudé qui peuvent servir d'interface. Dans le cadre d'une porte en acier, dite « porte mixe » pour laquelle le caisson de porte est assemblé sur une tôle rapporte (appelée cadre renfort) via une feuillure tournée vers l'extérieur du véhicule. Une telle disposition qui permet de créer une interface naturelle à la coulisse constitue une vraie difficulté pour assurer une mise en géométrie de l'élément d'habillage de type enjoliveur. En effet la fixation doit permettre de concilier une mise en géométrie de l'élément d'habillage sur le cadre de porte tout en conservant une étanchéité parfaite. A titre d'exemple en effet, l'appui de cette pièce sur le cadre de porte selon l'état de la technique représenté à la figure 1 permet sa mise en géométrie. Elle ne permet cependant pas de garantir l'appui permanant de l'enjoliveur sur le moulage de la vitre fixe. Elle autorise donc des fuites.

Un des objectifs de l'invention est de proposer un élément d'habillage de vitre facile à mettre en géométrie, et apte à présenter une qualité d'étanchéité irréprochable et répétable, quelque soit le montage réalisé.

En outre, en réponse à des objectifs que l'on retrouve invariablement chez les différents constructeurs automobiles, la présente invention se veut également peu coûteuse et peu encombrante.

Pour répondre à ces objectifs, l'invention propose un élément d'habillage de vitre pour véhicule automobile du type décrit précédemment, caractérisé en ce qu'une nervure unique est formée vers l'extrémité libre du moyen d'appui, de sorte que l'appui de l'élément d'habillage contre la structure de porte est réalisée par cette nervure, et en ce qu'une protubérance est formée vers l'extrémité avant de l'élément d'habillage de sorte que cette protubérance exerce une pression contre la vitre.

Selon différentes caractéristiques de la présente invention :
- la protubérance s'étend sur toute la hauteur de la plaque formant l'élément d'habillage, le long de l'extrémité avant de cet élément d'habillage.
- la nervure s'étend de façon continue sur toute la hauteur du moyen d'appui, le long de l'extrémité libre de ce moyen d'appui, ou prend la forme d'éléments en saillie qui s'étendent à distance régulière l'un de l'autre sur toute la hauteur du moyen d'appui.
- la partie arrière de la vitre étant surmoulée, la protubérance de l'élément d'habillage exerce une pression contre le surmoulage de la vitre.

L'invention protège également un procédé de montage d'un élément d'habillage de vitre tel que décrit précédemment, dans lequel l'élément d'habillage est maintenu en appui contre la structure de la porte et contre la partie arrière de la vitre, dans lequel on vient engager des moyens de serrage pour fixer l'élément d'habillage à la structure de porte, caractérisé en ce que une rotation de l'élément d'habillage est réalisée autour de l'axe formé par le contact entre la nervure et la structure de porte, et en ce que cette rotation applique la protubérance de l'élément d'habillage contre la vitre.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe d'un élément d'habillage selon l'état de la technique ;
- la figure 2 est une vue en coupe similaire à la figure 1, représentant un élément d'habillage selon l'invention ;

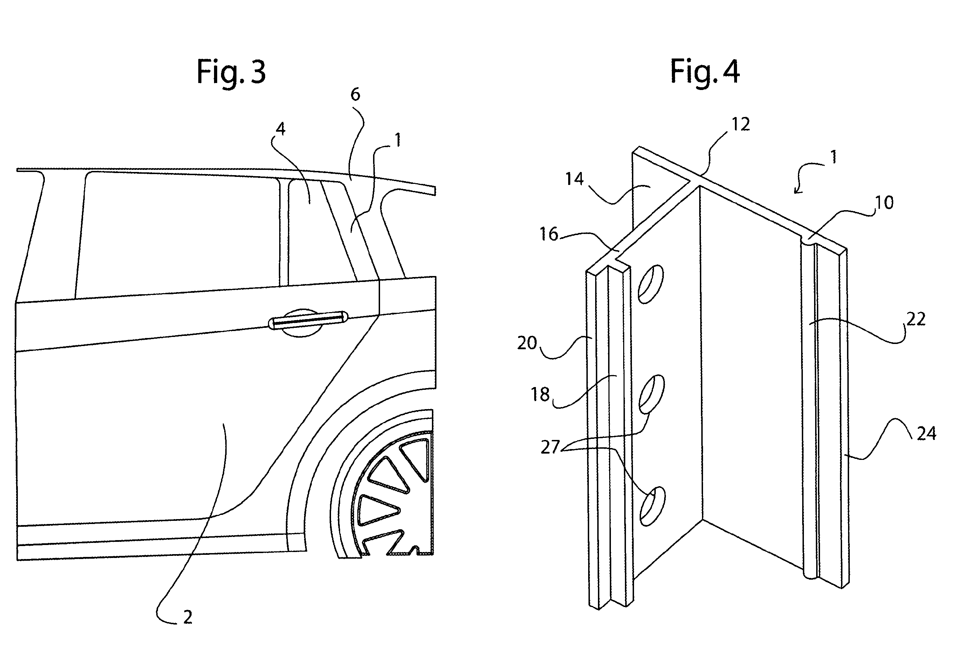

- la figure 3 est une vue de côté d'un véhicule comportant un élément d'habillage selon l'invention ;
- la figure 4 est une vue en perspective d'un élément d'habillage selon l'invention.

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

La présente invention décrit un élément d'habillage de vitre 1, ainsi que le procédé de mise en géométrie de cet élément d'habillage 1, pour une porte automobile 2 en présence d'une vitre fixe 4. Il sera compris que les moyens décrits ci-dessous pourraient être mis en place pour d'autres éléments d'habillage, dans la mesure ou l'élément d'habillage 1 permet, tel que cela va être décrit ci-dessous, de trouver un compromis optimum entre les prestations qualité perçue, étanchéité, inviolabilité et facilité de montage.

En effet, outre ses caractéristiques de finition et de qualité perçue, cette pièce doit assurer l'étanchéité de la porte 2 à l'eau et à l'air, tout en garantissant l'inviolabilité du véhicule, c'est-à-dire l'impossibilité de démonter la vitre fixe 4 et un montage aise.

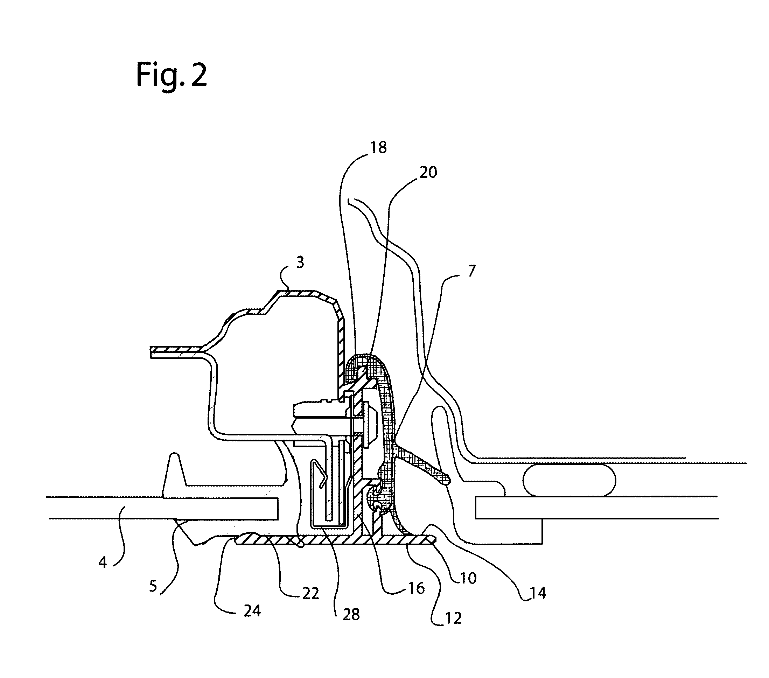

Tel que représenté sur la figure 2, l'élément d'habillage 1 selon l'invention est formé d'une plaque 10 sensiblement plane, une première face d'aspect 12 étant destinée à être orientée vers l'extérieur du véhicule, une deuxième face fonctionnelle 14 étant destinée à être fixée sur la caisse du véhicule, et notamment le caisson de porte 3. Cet élément d'habillage 1 s'étend principalement verticalement, sur toute la hauteur de la vitre que l'élément vient habiller.

La deuxième face fonctionnelle 14 présente une forme d'équerre, avec un moyen d'appui 16 venu de matière avec la deuxième face 14, et qui s'étend perpendiculairement à cette face sensiblement en son centre, sur toute la hauteur de l'élément d'habillage 1. Sur une face du moyen d'appui 16, une nervure 18 est réalisée sensiblement à l'extrémité libre 20 opposée à la deuxième face fonctionnelle 14 de l'élément d'habillage 1. Cette nervure 18 s'étend sur toute la hauteur du moyen d'appui 16, et forme, dans la section représentée à la figure 2, un point d'interface avec le caisson de porte 3 lorsque l'élément d'habillage 1 est en position sur la porte 2.

La deuxième face fonctionnelle 14 présente également une protubérance 22, formant une dent d'appui disposée à l'extrémité avant 24 de l'élément d'habillage 1, en saillie de la deuxième face fonctionnelle 14. Avantageusement, pour répondre au mieux au contraintes d'étanchéité, cette protubérance 22 est continue sur toute la hauteur de l'élément d'habillage, et applique ainsi un effort continu sur la vitre 4 et un éventuel moulage 5. Le dimensionnement de l'élément d'habillage 1 et la position de la nervure 18 et de la protubérance 22 sont tels que l'élément d'habillage 1 est apte à venir se positionner contre la partie arrière de la vitre fixe 4, la nervure 18 venant prendre appui sur le caisson de porte 3, le moyen d'appui 16 venant en regard de ce caisson de porte 3, et la protubérance 22 venant contre un moulage 5 disposé autour de la partie arrière de la vitre fixe 4. Il sera compris que le moulage évoqué et représenté sur la figure pourrait être non présent, la dent venant alors en appui directement sur la vitre.

Le principe de l'invention est ici d'arc-bouter l'élément d'habillage 1 entre le point d'interface arrière de cet élément d'habillage 1, réalisé par la nervure 18 en appui sur le caisson de porte 3, et le point d'interface avant sur le moulage 5 de vitre fixe 4 via la protubérance 22 qui se plante dans le moulage 5. Cet arc-boutement est rendu possible par la mise sous contrainte de l'élément d'habillage 1 par un ou plusieurs moyens de serrage 26. A cet effet, des trous de fixation correspondants 27 sont disposés sur la hauteur du moyen d'appui 16. La faible rotation de l'élément d'habillage 1, qui résulte du serrage des moyens de fixation 26 et du point d'interface arrière unique entre l'élément d'habillage 1 et le caisson de porte 3, permet de conserver une géométrie parfaite à l'élément d'habillage 1, en particulier dans son accostage avec la caisse ou une vitre de custode. La valeur de cette rotation est optimisée par la mesure et la mise en place du bras de levier adéquat entre le point de rotation au niveau de la nervure 18, et le point d'appui sur la vitre de custode réalisé par la protubérance 22. L'ensemble assure un rattrapage de jeu lors du vissage de l'élément d'habillage 1.

Lors du vissage des moyens de serrage 26, une rotation de l'élément d'habillage est réalisée autour de l'axe formé par le contact entre la nervure et la structure de porte, cette rotation appliquant la protubérance de l'élément d'habillage contre la vitre. Il sera compris que pour permettre cette rotation apte à appliquer la protubérance 22 contre la vitre 4, que cette vitre ait un surmoulage 5 ou non, la nervure 18 pourra être de forme continue sur toute la hauteur du moyen d'appui 16, le long de l'extrémité libre 20 de ce moyen d'appui 16, ou cette nervure 18 pourra prendre la forme de différentes nervures formant des éléments en saillie répartis régulièrement sur toute la hauteur du moyen d'appui 16. Dans les deux cas, une ligne de contact est générée et c'est autour de cette ligne que l'élément d'habillage 1 selon l'invention pivote lors du serrage sur la porte pour que la protubérance 22 disposée à l'opposé applique une contrainte sur la vitre 4, par l'intermédiaire de son moulage 5 si il est présent sur la vitre, afin que les conditions d'étanchéité soient optimales.

Selon un mode de réalisation de l'invention, le joint 6 disposé sur le cadre de porte au dessus de la vitre peut être prolongé d'un brin descendant 7, apte à se chausser sur l'élément d'habillage 1 afin d'assurer une étanchéité en partie intérieure de cet élément d'habillage 1.

Afin de faciliter le montage de l'élément d'habillage 1, il peut être prévu la mise en place d'une agrafe de pré-maintien 28 de l'élément d'habillage 1 sur le cadre de porte. Dans ces conditions, la pièce est maintenue en géométrie le temps de poser les moyens de serrage 26. Toutefois, grâce à la structure décrite ci-dessus, la présence de cette agrafe de pré-maintien 28 n'impacte pas la qualité de l'étanchéité comme cela peut être le cas dans une section de l'art antérieur. La forme de l'élément d'habillage 1, et notamment sa nervure unique 18, le positionnement de cette nervure 18 par rapport aux moyens de serrage 26, et sa dent 22, qui implique un montage avec une légère rotation, permet dans tous les cas d'assurer une étanchéité parfaite dans une zone fortement sollicitée.

Un élément d'habillage 1 selon l'invention permet de répondre aux contraintes de qualité perçue, car il est possible d'une part de masquer le moulage 5 sous l'enjoliveur, et d'autre part de jouer sur l'aspect de cet enjoliveur, ce qui facilite la montée en gamme du produit en passant d'un revêtement mat à un revêtement grand brillant sur la face d'aspect de l'élément d'habillage 1.

D'autre part, l'élément d'habillage 1 selon l'invention permet de répondre à la contrainte de l'inviolabilité, la présence d'un élément d'habillage 1 tuilé sur la partie arrière de la vitre fixe 4 permet de rendre cette vitre impossible à déchausser pour peu que l'élément d'habillage 1 soit solidement fixé sur le cadre de porte.

Enfin, tel que décrit précédemment, l'étanchéité à l'eau et à l'air est assurée de façon optimale par l'élément d'habillage 1 selon l'invention. Ce point est d'autant plus important que cette zone est sollicitée par l'eau mais aussi par l'air. Elle est en effet proche de l'oreille du passager arrière et la moindre fuite peut le perturber et générer un inconfort.

## Revendications

1. Elément d'habillage (1) de vitre d'un véhicule automobile, dans lequel une plaque (10) sensiblement plane s'étend verticalement en arrière de la vitre (4), dans la continuité du plan de cette vitre (4), de sorte que l'extrémité avant (24) de l'élément d'habillage (1) recouvre la partie arrière de la vitre (4), et dans lequel cette plaque (10) porte un moyen d'appui (16) sensiblement perpendiculaire apte à venir en appui contre une structure de porte (3), au moins un moyen de serrage (26) assurant la fixation du moyen d'appui (16) et de l'élément d'habillage (1) associé contre la structure de porte,
**caractérisé en ce qu'**une nervure (18) unique est formée vers l'extrémité libre (20) du moyen d'appui (16), de sorte que l'appui de l'élément d'habillage (1) contre la structure de porte (3) est réalisée par cette nervure (18), et **en ce qu'**une protubérance (22) est formée vers l'extrémité avant (24) de l'élément d'habillage (1) de sorte que cette protubérance (22) exerce une pression contre la vitre (4).

2. Elément d'habillage selon la revendication 1, **caractérisé en ce que** la protubérance (22) s'étend sur toute la hauteur de la plaque (10) formant l'élément d'habillage (1), le long de l'extrémité avant (24) de cet élément d'habillage (1).

3. Elément d'habillage selon l'une des revendications 1 ou 2, **caractérisé en ce que** la nervure (18) s'étend de façon continue sur toute la hauteur du moyen d'appui (16), le long de l'extrémité libre (20) de ce moyen d'appui (16).

4. Elément d'habillage selon l'une des revendications 1 ou 2, **caractérisé en ce que** la nervure (18) prend la forme d'éléments en saillie qui s'étendent à distance régulière l'un de l'autre sur toute la hauteur du moyen d'appui (16), le long de l'extrémité libre (20) de ce moyen d'appui (16).

5. Elément d'habillage d'une vitre selon l'une des revendications précédentes, la partie arrière de cette vitre (4) étant surmoulée, **caractérisé en ce que** la protubérance (22) de l'élément d'habillage (1) exerce une pression contre le surmoulage (5) de la vitre (4).

6. Procédé de montage d'un élément d'habillage (1) de vitre tel que revendiqué précédemment, dans lequel l'élément d'habillage (1) est maintenu en appui contre la structure de la porte (3) et contre la partie arrière de la vitre (4), dans lequel on vient engager des moyens de serrage (26) pour fixer l'élément d'habillage (1) à la structure de porte (3), **caractérisé en ce que** une rotation de l'élément d'habillage (1) est réalisée autour de l'axe formé par le contact entre la nervure (18) et la structure de porte (3), et **en ce que** cette rotation applique la protubérance (22) de l'élément d'habillage (1) contre la vitre (4).

## Claims

1. Glass trim element (1) of a motor vehicle, in which a substantially flat plate (10) extends vertically behind the glass (4), in the continuity of the plane of this glass (4), so that the front end (24) of the trim element (1) covers the rear portion of the glass (4) and in which this plate (10) carries a substantially perpendicular bearing means (16) capable of bearing against a door structure (3), at least one clamping means (26) fastening the bearing means (16) and the associated trim element (1) against the door structure, **characterized in that** a single rib (18) is formed towards the free end (20) of the bearing means (16), so that the pressure of the trim element (1) against the door structure (3) is achieved by this rib (18), and **in that** a protuberance (22) is formed towards the front end (24) of the trim element (1) so that this protuberance (22) exerts a pressure against the glass (4).

2. Trim element according to Claim 1, **characterized in that** the protuberance (22) extends over the whole height of the plate (10) forming the trim element (1), along the front end (24) of this trim element (1).

3. Trim element according to one of Claims 1 and 2, **characterized in that** the rib (18) extends continuously over the whole height of the bearing means (16), along the free end (20) of this bearing means (16).

4. Trim element according to one of Claims 1 and 2, **characterized in that** the rib (18) takes the form of protruding elements that extend at an even distance from one another over the whole height of the bearing means (16), along the free end (20) of this bearing means(16).

5. Trim element of a glass according to one of the preceding claims, the rear portion of this glass (4) being overmoulded, **characterized in that** the protuberance (22) of the trim element (1) exerts a pressure against the overmoulding (5) of the glass (4).

6. Method of installing a glass trim element (1) as claimed above, in which the trim element (1) is kept bearing against the door structure (3) and against the rear portion of the glass (4), in which clamping means (26) are engaged in order to fasten the trim element (1) to the door structure (3), **characterized in that** a rotation of the trim element (1) is carried out around the axis formed by the contact between the rib (18) and the door structure (3), and **in that** this rotation presses the protuberance (22) of the trim element (1) against the glass (4).

## Patentansprüche

1. Verkleidungselement (1) einer Glasscheibe eines Kraftfahrzeugs, bei dem eine im Wesentlichen ebene Platte (10) sich senkrecht hinter der Glasscheibe (4) in der Fortsetzung der Ebene dieser Glasscheibe (4) derart erstreckt, dass das vordere Ende (24) des Verkleidungselements (1) den hinteren Teil der Glasscheibe (4) bedeckt, und bei dem diese Platte (10) eine im Wesentlichen lotrechte Auflageeinrichtung (16) trägt, die gegen eine Türkonstruktion (3) in Auflage kommen kann, wobei mindestens eine Klemmeinrichtung (26) die Befestigung der Auflageeinrichtung (16) und des zugeordneten Verkleidungselements (1) an der Türkonstruktion gewährleistet,
**dadurch gekennzeichnet, dass** eine einzige Rippe (18) so zum freien Ende (20) der Auflageeinrichtung (16) hin geformt ist, dass die Auflage des Verkleidungselements (1) auf der Türkonstruktion (3) durch diese Rippe (18) realisiert wird, und dass ein Vorsprung (22) so zum vorderen Ende (24) des Verkleidungselements (1) hin geformt ist, dass dieser Vorsprung (22) einen Druck gegen die Glasscheibe (4) ausübt.

2. Verkleidungselement nach Anspruch 1, **dadurch gekennzeichnet, dass** der Vorsprung (22) sich über die ganze Höhe der das Verkleidungselement (1) formenden Platte (10) entlang des vorderen Endes (24) dieses Verkleidungselements (1) erstreckt.

3. Verkleidungselement nach einem der Ansprüche 1 oder 2, **dadurch gekennzeichnet, dass** die Rippe (18) sich durchgehend über die ganze Höhe der Auflageeinrichtung (16) entlang des freien Endes (20) dieser Auflageeinrichtung (16) erstreckt.

4. Verkleidungselement nach einem der Ansprüche 1 oder 2, **dadurch gekennzeichnet, dass** die Rippe (18) die Form von vorstehenden Elementen annimmt, die sich in gleichmäßigem Abstand zueinander über die ganze Höhe der Auflageeinrichtung (16) entlang des freien Endes (20) dieser Auflageeinrichtung (16) erstrecken.

5. Verkleidungselement nach einem der vorhergehenden Ansprüche, wobei der hintere Teil dieser Glasscheibe (4) überformt ist, **dadurch gekennzeichnet, dass** der Vorsprung (22) des Verkleidungselements (1) einen Druck gegen die Überformung (5) der Glasscheibe (4) ausübt.

6. Verfahren zur Montage eines Glasscheibe-Verkleidungselements (1) wie vorher beansprucht, bei dem das Verkleidungselement (1) gegen die Konstruktion der Tür (3) und gegen den hinteren Teil der Glasscheibe (4) in Auflage gehalten wird, bei dem Klemmeinrichtungen (26) zum Befestigen des Verkleidungselements (1) an der Türkonstruktion (3) eingeführt werden, **dadurch gekennzeichnet, dass** eine Drehung des Verkleidungselements (1) um die Achse durchgeführt wird, die durch den Kontakt zwischen der Rippe (18) und der Türkonstruktion (3) geformt wird, und dass diese Drehung den Vorsprung (22) des Verkleidungselements (1) gegen die Glasscheibe (4) anlegt.
